# EUROPEAN PATENT APPLICATION

(11) **EP 3 868 708 A1**
(43) Date of publication of application: **25.08.2021**
(21) Application number: 20204948.2
(22) Date of filing: 30.10.2020
(51) Int. Cl.: C01B 3/30

(54) **METHOD AND SYSTEM FOR DIRECT THERMAL DECOMPOSITION OF A HYDROCARBON COMPOUND INTO CARBON AND HYDROGEN**

(30) Priority: 21.02.2020 EP 20158784
(71) Applicant: L 2 Consultancy B.V., 3722 BR Bilthoven (NL)
(72) Inventor: van Lookeren Campagne, Constant Johan, 3722 BR Bilthoven (NL)
(74) Representative: van Lookeren Campagne, Constantijn August

(57) **Abstract**

A method of carrying out direct thermal decomposition of a hydrocarbon compound into carbon and hydrogen comprises: introducing a gaseous feed stream (8;48) comprising at least one hydrocarbon compound into a reactor (12;52); and removing at least hydrogen gas and particulate carbon formed by thermal decomposition from the reactor (12;52). The method includes providing in the reactor (12;52) a layer (16;53) permeable to the particulate carbon and comprising loose particles other than the particulate carbon in a gas phase and passing the gaseous feed stream (8;48) through the layer (16; 53). The loose particles other than the particulate carbon comprise particles comprising a catalyst on a carrier. The method includes removing at least part of the layer (16;53) from the reactor (12;52), separating constituents of the removed part, the constituents including some of the particles comprising a catalyst on a carrier, and returning the separated particles comprising a catalyst on a carrier to the layer (16;53). The layer (16;53) forms a fluidised bed. The particles comprising a catalyst on a carrier comprise particles of which at least an outer shell is porous and acts as the carrier and which have a hollow core or a porosity decreasing from core to surface.

## Description

The invention relates to a method of carrying out direct thermal decomposition of a hydrocarbon compound into carbon and hydrogen.

The invention also relates to a system for direct thermal decomposition of a hydrocarbon compound into carbon and hydrogen.

WO 2019/099795 A1 discloses a process for converting methane into solid carbon and hydrogen using a bubble column reactor, whereby methane is bubbled through the bottom of the reactor containing a molten metal of a specific composition with catalytic functionality that increases the rate of methane decomposition and has solubility for both hydrogen and carbon but little or no solubility for the methane. In some embodiments, the process for converting methane into solid carbon and hydrogen uses a bubble column reactor filled with two separate phases of molten liquids. The top of the reactor contains a molten salt that is immiscible with the bottom phase, which is a molten metal of a specific composition with catalytic functionality that increases the rate of methane decomposition and has solubility for both hydrogen and carbon, but no solubility for the methane. The molten metal thus has the ability to remove the reaction products from the reactants, allowing the conversion of methane to exceed the equilibrium conversion of a closed reactor system. As the bubbles containing hydrogen, as phase intermediate products, and particulate carbon with metal residue leave the molten metal phase and enter the molten salt phase, the high-temperature salt with a specific composition facilitates the completion of the reaction and the removal of metal impurities carrying the low-density pure carbon to the molten salt surface, where it accumulates as a separate solid phase. At least some of the molten salt will still be removed from the reactor with the carbon and separated in a further separation system. The molten salt thus has to be replenished or at least recirculated whilst being kept in a molten state. Thus, implementation of this disclosure to allow the solid carbon to be removed continuously is relatively complicated and expensive.

WO 2019/154732 A1 discloses a process for the direct thermal decomposition of hydrocarbons into solid carbon and hydrogen. A hydrocarbon gas stream is pre-heated and conducted through a conduct located surrounding the external perimeter of at least one liquid metal reactor, obtaining a pre-heated gas stream at a temperature between 500 and 700° C. The pre-heated gas stream is injected into the liquid metal reactor, in particular into a reactor pool containing a liquid media. Once inside the reactor pool, the hydrocarbon gas moves upwards by buoyancy, forming a multi-phase flow, the hydrocarbon gas being decomposed into a gas comprising hydrogen and solid carbon. The temperature inside the reactor pool is maintained at a temperature preferably comprised between 900 and 1200° C and more preferably between 1050 and 1100° C. The solid carbon is accumulated at the top of the reactor pool on the free surface of the liquid media located inside the liquid metal reactor, forming a carbon layer made up of solid carbon particles. Once the carbon layer reaches a pre-determined thickness, the carbon particles constituting the layer are displaced into at least one carbon extraction system consisting of a porous rigid section located at the top of the liquid metal reactor, above the free surface of the liquid media, from which they are conducted into at least one recipient for collecting the carbon particles. Preferably, the movement of the carbon particles towards the recipient for collecting them will be facilitated by a vibrational movement generated by a mechanical means such as a mechanical shaft. This set-up is complicated to implement reliably. Moreover, the layer of carbon particles will contain some of the metal, including the catalyst. The purity of the carbon particles will be relatively low and the metal will need to be replaced.

US 2,794,709 discloses a process for the decomposition of natural gas. Natural gas is initially passed through a desulphurisation zone and thence successively through a dehydration zone and through a zone for the removal of oxygen and carbon dioxide. The thus purified charge then passes in indirect heat exchange with hot flue gases to utilise more efficiently some of the heat in the system as in a heat exchanger and is thereafter introduced at a multiplicity of points upwardly into a reactor. In the bottom of the reactor is a bath of molten material through which the charge gases pass with resultant heating to decomposition temperature. These heated gases continue their upward motion and in so doing enter into and pass through a fluidised bed of carbon particles, which is in turn fluidised by the motion of such gases passing therethrough that move at a superficial velocity of about two feet per second (0.6 m·s⁻¹). The product gas and such fine particles as may be suspended therein leave the top of the reactor and after passing through a heat exchanger enter a suitable separating system, wherein the carbon and the gas are separated. Inasmuch as all of the carbon produced in the reaction zone is not removed in the gas stream, there is appreciable accumulation of carbon in the fluidised section. To obtain advantages of collecting this carbon and to prevent the build-up of carbon and thus increasing the size of the fluidised bed to an inoperable level, suitable amounts of carbon comprising the fluidised bed are withdrawn. The metal bath contemplated comprises 70 % copper and 30 % tin. In general, this molten bath is at a temperature of about 1800° F (982° C) and metal withdrawn through an outlet line for passage to an educator for re-heating is generally at this temperature. The re-heated molten metal is introduced at a temperature of approximately 2000° F (1093° C). Although it is stated that the fluidised bed is the reaction zone, the indicated temperature suggests that carbon is formed in the metal bath. It seems that the particulate carbon of the fluidised bed is that formed in the reactor. At least some of the carbon of the fluidised bed will be contaminated by the metal and form agglomerates that are virtually impossible to separate from fine and pure carbon particles. Thus, regardless of whether the disclosure is correct, the known process will result in carbon particles of relatively low purity and relatively badly defined properties.

WO 2011/029144 A1 discloses a process for catalytically converting light hydrocarbons to hydrogen substantially without co-production of carbon dioxide. The hydrocarbon gas may be any gas stream that comprises light hydrocarbons. Illustrative examples include biogas. The catalyst may be disposed in a reaction portion of a catalytic reactor in a manner in which hydrocarbon gas can be contacted with the catalyst. In an embodiment, the catalyst is a bimetallic MₓNi_{y}-type catalyst supported on a substrate, where M is Mo or La. Preferably, the substrate is mesh-like, perforated, porous or filamentous. Spherical graphitic particles with a mean diameter of 4 µm and comprising a portion of amorphous carbon material are typically produced in a configuration wherein the supported bimetallic catalyst can be suspended in a bed of quartz wool disposed within an interior of the reactor and subjected to a longitudinal flow of light hydrocarbon at about 1 atm. On attaining a mean diameter of 0.5 mm, the graphitic particles appear to detach themselves from the supported catalyst but further growth is observed. A mixture of hydrogen and methane is withdrawn from the reactor and passed to a separator to separate and recover hydrogen generated in the catalytic reactor. An illustrative example of a suitable separator includes a pressure swing adsorption separator.

EP 2 476 648 A1 discloses a method for producing carbon nanotubes and hydrogen by using a support on which a catalyst is supported and a carbon source containing carbon atoms and hydrogen atoms. When particles in a powder form, a bead form or the like are used for the support, the particles are filled into a reactor. By flowing gases such as the catalyst source and the carbon source through a particle layer comprising these particles, the support of the catalyst and the synthesis of carbon nanotubes are performed on the surface of the particles in a fixed bed state or a fluidised bed state. As the support, particles having such weight that the particles are not emitted together with these gas flows from the reactor are used. A chemical vapour deposition method is used to coat the catalyst on the carrier in the reactor. Operating the process continuously is therefore not feasible and the catalyst is used up.

WO 2007/051213 A1 discloses the use of a method for hydrogen production in which at least a part of a hydrocarbon-containing feed gas is introduced into a reformer, wherein the feed gas is contacted with a catalyst in the reformer, wherein the feed gas is converted into hydrogen and solid carbon compositions, for the direct (on-site) production of a hydrogen-containing gas at filling stations. It is preferred that the catalyst is arranged on a carrier. The carrier may comprise particulate ceramic bodies or particulate vitreous bodies, which on the one hand have a larger surface area than flat carriers and on the other hand can also be used in fluidised layers. It is also disclosed that it is advantageous when the catalyst is continuously transferred into and out of the reformer to guarantee continuous operation of the reformer and at the same time allow the carbon compositions deposited on the catalyst to be separated continuously and supplied for further use. In the embodiment actually described in detail, the catalyst is transported in counter-current to the gas by means of a slowly rotating spiral conveyor. Essentially all of the carbon formed in the reactor will thus either be deposited on the catalyst or on the conveyor and similar structures, and will need to be removed.

WO 2005/054124 A1 discloses a method for conversion of hydrocarbons to an environmentally friendly product, particularly carbon. A metal catalyst used in the method is typically a porous metal catalyst comprising a transition metal or an alloy. To minimise catalyst deactivation, heated feed gas is preferably fed into an agitated catalyst/carbon bed at a plurality of points or over the entire under surface of a gas-fluidised bed. It is possible for the reactor to be constructed in a manner so as to allow continuous replacement of deactivated catalyst and removal of carbon while adding new catalyst. The catalyst is relatively expensive. If optimised for use in the fluidised bed reactor, the catalyst is likely to require careful handling to prevent attrition and thereby loss of catalyst material and contamination of the carbon.

US 3,340,011 relates to the production of hydrogen by decomposition of hydrocarbons in contact with a Group VIII metal catalyst supported on alumina containing calcium, strontium or barium to improve hardness and attrition resistance of the catalyst. One method of effecting the process comprises locating the catalytic composite in a fluidised-fixed bed within a reactor. The hydrocarbon charge is passed therethrough at the desired decomposition reaction temperature in upward flow, and the reactor effluent is withdrawn from the reactor at a rate which will ensure an adequate residence time therein. In this type of operation, the hydrocarbon charge is periodically alternated with a flow of air or other oxygen-containing gas to effect a controlled burning of the carbon deposits from the catalytic composite. This process step is wasteful of the carbon formed and gives rise to greenhouse gas emissions.

GB 1,044,273 discloses a process for the production of hydrogen by the catalytic decomposition of a hydrocarbon charge stream in the gaseous phase and in the presence of sub-divided catalyst particles. The catalyst particles are introduced into the upper end of a reaction zone and passed at decomposition conditions downwardly therethrough counter-currently to the hydrocarbon charge stream, thereby producing a hydrogen-containing product stream and carbon-containing particles. Refractory catalyst base materials which may be used are alumina, silica-alumina or silica-magnesia with an oxide such as one of zirconium or titanium, or alternatively one or more of the foregoing oxides with an oxide of chromium, molybdenum or vanadium. Preferably, one or more metals or metal oxides of Group VIII of the Periodic Table are utilised to provide optimum hydrogen formation. Thus, nickel, iron or cobalt compounds are advantageously used with a refractory base material, such as silica-alumina. For a fluidised operation, the particle size will generally be between 0.01 and 0.8 mm in diameter, such that the particles may be readily fluidised. However, the reactor does not comprise a fluidised bed. The relatively small particles are not easily separated from the carbon formed thereon.

It is an object of the invention to provide a method and system for direct thermal decomposition of a hydrocarbon compound into carbon and hydrogen that can be used to obtain relatively high-quality carbon relatively easily and efficiently.

This object is achieved according to a first aspect by the method according to claim 1.

The loose particles of the layer can be tailored to achieve good separation from the particulate carbon. The particulate carbon, having a controlled size generally much lower than the particle size of the loose particles from the external source, will pass through the layer. The particulate carbon can then easily be separated from the particles from the external source, if not already entrained by the product gas. By using particles other than the particulate carbon, the particle properties and the superficial velocity of the gas can be set independently. The superficial velocity can be optimised for conversion of the hydrocarbon compound into carbon and hydrogen, in particular to achieve a minimum conversion yield. The loose particles can be selected for best possible separation given the superficial velocity.

The gases in the gaseous feed stream will generally comprise or consist essentially of gases with the formula CₙHₙ₊₂, where n = 1-5. Direct thermal decomposition, also known as pyrolysis, is an endothermic reaction in which essentially no CO₂ is produced. The process is thus environmentally friendlier than Steam Methane Reforming (SMR), for example, as well as being simpler and requiring less energy. Conversion yields of over 90 % can be achieved, which is sufficient for many applications to avoid having to purify the product gas stream.

The particulate carbon formed in the method is mainly in the form of graphite. The carbon will usually be in the form of powder comprising flakes having a largest diameter in the range of 40-100 nm. Even if the powder forms clusters or agglomerates, these will have a diameter in the range of 15-20 µm. The particles other than the particulate carbon may have a diameter an order of magnitude larger than that of the particulate carbon. For example, the particles other than the particulate carbon may have a diameter, or a mean diameter D₅₀, of at least 0.1 mm, e.g. at least 0.2 mm, for example at least 1 mm.

The method yields a product stream from the reactor, wherein the product stream consists of a stream of gas comprising at least the hydrogen, as well as of entrained solid matter. At least 90 %, e.g. at least 95 %, more particularly at least 99 % by mass of the entrained solid matter is formed by solid carbon. The remainder comprises essentially impurities. Examples of such impurities can include the material of the catalyst present in the reactor and minerals already present in the feed stream (e.g. where the feed stream comprises biogas).

The superficial velocity of gas flowing through the layer can be controlled to achieve fluidisation. In the fluidised bed, relatively many collisions take place, so that the particulate carbon emerges as relatively pure and fine powder. Relatively little remains in the layer and little or no catalyst contaminates the particulate carbon. The collisions between the loose particles other than the particulate carbon ensure on the one hand that relatively little carbon adheres to these particles. Because the carbon is formed in the fluidised bed, carbon deposits elsewhere in the reactor, e.g. on the reactor wall, are also minimised. The method can thus be executed continuously for a relatively long period.

Because the catalyst is provided on a carrier, it is not necessary to provide loose particles consisting entirely of the catalyst. The material composition of the carrier will differ from that of the catalyst. This can limit costs and allows the carrier to be selected with a view to properties making the particles comprising the catalyst on a carrier well-suited to use in the fluidised bed and easily separable from the particulate carbon. For example, the relatively high porosity in the core or the presence of a hollow core means the particles can have a relatively large diameter, but also a relatively low bulk density. The lower porosity at the surface means that the particles will have a relatively high crush strength and resistance to abrasion. Furthermore, the particles will be smoother, facilitating the separation of carbon formed on the surface.

It is noted that the loose particles may comprise further particles without a catalyst, e.g. further particles of the same type as the carrier particles. Where the particles have a porous outer shell and a core that is not hollow, the porosity may decrease in the sense that the porosity of the core is approximately uniform and higher than that of the shell. Alternatively or additionally, the porosity may decrease gradually in radial direction within at least one of the core and the shell.

In the method, the fluidised bed is operated continuously and part of the layer is removed whilst the fluidised bed is maintained by adding loose particles, including particles comprising a catalyst on a carrier, to the fluidised bed.

An embodiment of the method comprises introducing a further gas stream into the layer, e.g. an inert gas stream.

The gaseous feed stream can thus be introduced into the reactor at a rate optimised for the thermal decomposition reaction, which may be a relatively low rate if the separation layer has a relatively low height. It is thus possible to heat the gaseous feed stream over a relatively short distance to a temperature sufficient to effect direct thermal decomposition. This also concentrates the thermal decomposition in a well-defined area, in particular the fluidised bed, preventing deposits elsewhere. The further gas stream may be heated prior to being introduced into the layer. If the further gas stream is an inert gas stream, relatively pure particulate carbon is obtained. Relatively few by-products, in particular little or no carbon dioxide, are generated.

In a particular version of this example, the further gas stream comprises nitrogen, and the nitrogen is obtained by reacting with air a gas stream comprising mainly hydrogen, e.g. a gas stream obtained from a product stream from the reactor.

This is a relatively efficient and simple way of obtaining an inert gas for maintaining the layer as a fluidised bed. The product stream from the reactor will comprise little or no CO₂. Oxidisation of the particulate carbon or the other particles in the layer is avoided, as are expensive processes for obtaining nitrogen.

An embodiment of the method comprises:
providing a molten medium in a bubble reactor; and
heating the gaseous feed stream by introducing the gaseous feed stream into the molten medium in the bubble reactor.

The bubble reactor may be the reactor in which the layer comprising loose particles is provided. Alternatively, the bubble reactor may be used to pre-heat the gaseous feed stream before the gaseous feed stream is introduced into the fluidised bed reactor. A set-up with one reactor vessel comprising different zones is also conceivable. In an embodiment, the gaseous feed stream is heated to a temperature lower than that required to effect direct thermal decomposition in the molten medium. This may be achieved by controlling the rate at which the gaseous feed stream is passed through the molten medium, the path length through the molten medium, the temperature of the molten medium or a combination of two or more of these parameters. The molten medium may be or comprise one or more metals or one or more salts, for example. Even if some direct thermal decomposition takes place in the molten medium, the carbon will float to the surface, from which the carbon can be removed more easily than if the carbon were to be deposited on the reactor surface(s).

In a particular example of this embodiment, the layer is provided on top of the molten medium in the bubble reactor.

In this example, the direct thermal decomposition can be effected at least partly in the molten medium. The carbon will float to the surface of the molten medium, where the carbon is separated relatively well from the molten medium by the loose particles other than the carbon formed by thermal decomposition. The loose particles can be tailored to achieved this separation. The particulate carbon, having a relatively small particle size, is easily separated from the loose particles, either already in the layer, or when the constituents of the part of the layer removed from the reactor are separated, or at both stages. Mechanical devices for scraping carbon from the surface of the molten medium are not required. This makes the method easier to implement and ensures that less of the medium is removed from the reactor with the carbon. Relatively pure carbon is obtained and relatively expensive material can be used as the medium, e.g. metals that also act as a catalyst for the direct thermal decomposition reaction.

Thus, in an embodiment of the method that comprises providing a molten medium in a bubble reactor and heating the gaseous feed stream by introducing the gaseous feed stream into the molten medium in the bubble reactor , the thermal decomposition is effected in at least the molten medium.

Because particulate carbon formed by thermal decomposition is formed in the molten medium, the properties of this particulate carbon can be controlled relatively well. In addition, the reactor volume is used relatively efficiently, compared to using the molten medium only or predominantly for heating the gaseous feed stream to a temperature insufficient to achieve direct thermal decomposition.

An embodiment of the method includes obtaining a gas stream from a product stream from the reactor and generating electrical power by reacting the gas stream with a gas mixture comprising at least one oxidant.

Obtaining the gas stream need not involve any processing. The gas stream may just be a fraction of the product stream. The gas stream may thus carry particles. These may also be reacted with the gas mixture. Generally, however, the particulate carbon will be separated from the other constituents of the product stream to obtain the gas stream. This gas stream need still not consist essentially of pure hydrogen. Thus, in circumstances in which pure hydrogen is not required, the product stream from the reactor is still put to good use.

In embodiment, the loose particles other than the particulate carbon comprise spherical particles.

Such particles have good resistance to abrasion. Thus, the size difference between these particles and the particulate carbon can be maintained for a relatively long time. The loose particles may have a sphericity better than 0.7, for example. Here, sphericity is defined as the ratio of the surface area of a sphere with the same volume as a given particle to the surface area of that given particle. The loose particles may have a relatively high specific crush strength, e.g. at least 1 N/mm² (according to ASTM D-4179 and relative to the cross-sectional area of the particle), for example at least 3 N/mm². An upper limit may be e.g. about ⁷ N/mm².

In an embodiment, the loose particles other than the particulate carbon are provided from a source, and, at least at source, the particles have a particle size distribution ratio D₉₀/D₅₀ of less than 1.6, e.g. less than 1.4 or less than 1.1.

The very well-defined particle size simplifies separation from the particulate carbon. The well-defined particle size also makes it easier to provide the layer in the form of a fluidised bed. Here, D₅₀ refers to the mean particle diameter and D₉₀ is the diameter at which 90 % of the particle population has a lower diameter. The particle size can be measured using laser diffraction apparatus, for example. Due to the well-defined particle-size distribution, the span ((D₉₀-D₁₀)/D₅₀) will in most embodiments also be below the indicated upper limits.

In an embodiment, the loose particles other than the particulate carbon comprise particles made predominantly of at least one ceramic material.

These particles may in particular include the carrier particles on which the catalyst is provided. The particles are relatively strong and able to withstand high temperatures. The ceramic material or materials may have a melting point above e.g. 1000° C.

Carbon particles, e.g. agglomerates, may be used instead of the particles made predominantly of at least one ceramic material.

In an embodiment, the particles of which at least an outer shell is porous and acts as the carrier have a specific surface area in the range of 60 - 1200 m²/g.

This helps achieve relatively high conversion yields without sacrificing strength too much.

In an embodiment, the loose particles other than the particulate carbon have a crush strength of more than 1 N/mm².

This makes the loose particles suitable for use in the fluidised bed. There is no particular upper limit to the useful crush strength, but the value will generally be below 10 N/mm², e.g. below 7 N/mm².

The loose particles other than the particulate carbon may have a bulk density of less than 1100 kg/m³.

The bulk density will generally be above 500 kg/m³.

In an embodiment, the catalyst comprises at least one transition metal.

The catalyst may comprise an activated metal, e.g. at least one of nickel, palladium or platinum or an alloy thereof, for example. The carrier particles may be made of a different, less expensive and/or stronger, material.

An embodiment of the method comprises separating constituents of the removed part of the layer in an air separator.

The air separator is relatively well-suited to this task.

An embodiment of the method comprises obtaining a gas stream comprising the hydrogen from a product stream from the reactor, compressing the gas stream and storing the compressed gas under pressure in a storage vessel.

The compressed gas from the storage vessel can be used to refuel a land-based, or maritime vehicle or an aircraft, for example. The pressure in the storage vessel may be at least 300 bar. This would make it possible to refuel land-based vehicles, e.g. lorries or buses. The gas stream may be compressed using a solid-state electrochemical compressor, for example. The gas stream comprising the hydrogen obtained from the product stream may consist essentially of hydrogen (but for trace impurities).

An embodiment of the method comprises obtaining a gas stream from a product stream from the reactor and separating the hydrogen from at least one other gas present in the gas stream obtained from the product stream.

In this embodiment, the conversion yield of the thermal decomposition process need not be quite so high. Relatively pure hydrogen is still obtained. The other gas or gases can be added to the gaseous feed stream.

In an example of this embodiment, the separation is effected by means of a pressure-swing adsorption (PSA) process or temperature-swing adsorption (TSA) process.

In an embodiment of the method, the gaseous feed stream is obtained from natural gas, e.g. Liquefied Natural Gas, LNG, and obtaining the gaseous feed stream comprises separating methane and higher-order hydrocarbons from at least one other constituent of the natural gas by means of a pressure-swing adsorption (PSA) or temperature-swing adsorption (TSA) process. Biogas obtained by fermentation of a biodegradable substrate may be used instead of or in addition to the natural gas as well. The method will then result in biogenic carbon.

In an example of any of the two previously-mentioned embodiments, the PSA or TSA process comprises introducing the gas stream or natural gas into an adsorption vessel comprising a bed of adsorbent beads, wherein the beads comprise a hollow core or at least one core comprising at least one inorganic material, which core is porous and non-adsorbent and, on the surface of the core, at least one layer comprising a porous and adsorbent material.

These beads may be the same as the particles other than the particulate carbon added to the layer. The beads provide fast mass transfer and low pressure drop.

In an embodiment of the method, separating constituents of the removed part includes separating carbon from the loose particles, e.g. mechanically separating the carbon from the loose particles.

Alternatives to mechanically separating the carbon from the loose particles include chemically separating the carbon from the loose particles. Mechanically separating the carbon, e.g. through friction, is relatively uncomplicated and does not give rise to high levels of contamination.

In an embodiment of the method, the gaseous feed stream is heated in the fluidised bed to a temperature higher than a temperature at which the gaseous feed stream is introduced into the reactor, the higher temperature being sufficient to effect the direct thermal decomposition.

Thus, it is possible to keep the fluidised bed relatively small and/or pass the gas through the fluidised bed at a relatively high rate, but to ensure that most of the thermal decomposition is effected in the fluidised bed. Carbon deposits in other parts of the apparatus used to carry out the method are largely avoided. This embodiment does not rule out pre-heating the gaseous feed stream to a lower temperature before the gaseous feed stream enters the fluidised bed. Such pre-heating can be carried out by plasma heating, by passing the gaseous feed stream through a molten medium, e.g. molten metal, microwave heating etc.

According to another aspect, the system according to the invention for direct thermal decomposition of a hydrocarbon compound into carbon and hydrogen, e.g. by means of a method according to the invention, comprises:
a reactor having at least one outlet for a product stream comprising the hydrogen gas,
a conduit for supplying a gaseous feed stream comprising at least one hydrocarbon compound;
a device, in communication with the conduit, for introducing the gaseous feed stream into the reactor; and
a quantity of loose particles comprising particles comprising a catalyst on a carrier,
wherein the reactor includes an inlet for introducing the loose particles other than particulate carbon formed in the reactor to form a layer of the loose particles in a gas phase, the layer being permeable to the particulate carbon,
wherein at least part of the layer is removable from the reactor, and
the system includes at least one device for separating constituents of the removed part and a device for returning at least some of the particles comprising a catalyst on a carrier that are comprised amongst the constituents to the layer.

The reactor is a fluidised bed reactor for providing the layer as a fluidised bed and the particles comprising a catalyst on a carrier comprise particles of which at least an outer shell is porous and acts as the carrier and which have a hollow core or a porosity decreasing from core to surface.

The system is suitable for carrying out the method according to the invention and thus for producing relatively pure particulate carbon of a relatively well-defined size relatively easily and efficiently. The carrier particles on which the catalyst is provided may have a distinct core and shell or the shell may comprise an outer region of each particle. The carrier particles may carry more than one material acting as the catalyst. The material composition of the catalyst may differ from that of the carrier particle, with the latter being coated or impregnated at the surface by the catalyst.

In an embodiment, the reactor comprises a bubble reactor, the system comprises a system for providing a molten medium in the bubble reactor, the device for introducing the gaseous feed stream is arranged to introduce the gaseous feed stream as bubbles into the molten medium in the bubble reactor, and the system is configured to form the layer on the molten medium.

In an example of this embodiment, the system for providing a molten medium in the bubble reactor is arranged to maintain the molten medium at a temperature sufficient to achieve thermal decomposition of the hydrocarbon compound in the molten medium.

The molten medium provides for good heat transfer. The particulate carbon will not adhere to the wall of the reactor vessel or deactivate catalysts. The properties of the particulate carbon can be controlled at least partially by the bubble properties.

An embodiment of the system further comprises a device for introducing a further gas stream, e.g. an inert gas stream, into the layer.

The device may be arranged to fluidise the layer independently of the rate at which the feed stream is introduced into the reactor.

In an example of this embodiment, the further gas stream comprises nitrogen, and the system includes a device arranged to obtain the nitrogen by reacting with air a gas stream comprising mainly hydrogen, e.g. a gas stream obtained from a product stream from the reactor.

An embodiment of the system, which may be an example of the previous embodiment, further includes a system for generating electrical power by reacting a gas stream obtained from a gas stream from a product stream from the reactor with a gas mixture comprising at least one oxidant.

As throughout the present disclosure, a gas stream obtained from another gas stream may be just a fraction of that other gas stream or even correspond to that other gas stream. Alternatively, obtaining a gas stream may involve separating constituents of that other gas stream.

An embodiment of the system further includes: at least one compressor for compressing a gas stream comprising the hydrogen and obtained from a product stream from the reactor; and at least one storage vessel storing the compressed gas under pressure.

The at least one compressor may include a solid-state electrochemical compressor. The at least one storage vessel may include at least one vessel in fluid communication with a device for refuelling a land-borne or maritime vehicle or an aircraft. The gas stream comprising the hydrogen obtained from the product stream may consist essentially of hydrogen (but for trace impurities).

The compressor may be arranged to compress and the storage vessel may be arranged to store the compressed gas at a pressure of at least 300 bar.

In an embodiment of the system, the at least one device for separating constituents of the removed part is an air separator.

An embodiment of the system further comprises an apparatus for separating the hydrogen from at least one other gas in a gas stream obtained from a product stream from the reactor, e.g. a pressure-swing adsorption (PSA) apparatus or a temperature-swing adsorption (TSA) apparatus.

An embodiment of the system further includes at least one pressure-swing adsorption (PSA) apparatus or temperature-swing adsorption (TSA) apparatus for obtaining the gaseous feed stream by separating methane and higher-order hydrocarbons from at least one other constituent of natural gas, e.g. Liquefied Natural Gas, LNG, or of biogas.

The PSA or TSA apparatus may be arranged to obtain the natural gas from the gas grid or a regasification apparatus for regassifying the LNG. Biogas may be obtained from a fermentation system for fermentation of a biodegradable substrate.

In an example of any of the two previous embodiments, the PSA apparatus or TSA apparatus comprises at least one adsorption vessel comprising a bed of composite adsorbent beads, and the beads comprise at least one core comprising at least one inorganic material, which core is porous and non-adsorbent and, on the surface of the core, at least one layer comprising a porous and adsorbent material.

Fast mass transfer for a relatively low pressure drop is achieved with these adsorbent beads.

An embodiment of the system comprises a device for heating the gaseous feed stream in the fluidised bed to a temperature higher than a temperature at which the gaseous feed stream is introduced into the reactor, the higher temperature being sufficient to effect the direct thermal decomposition.

In this embodiment, carbon formation is mainly limited to the fluidised bed.

The invention will be explained in further detail with reference to the accompanying drawings, in which:
- Fig. 1: shows a first system for direct thermal decomposition of at least one hydrocarbon compound in a gaseous feed stream into hydrogen and solid particulate carbon; and
- Fig. 2: is a schematic diagram showing a second system for direct thermal decomposition of at least one hydrocarbon compound in a gaseous feed stream into hydrogen and solid particulate carbon.

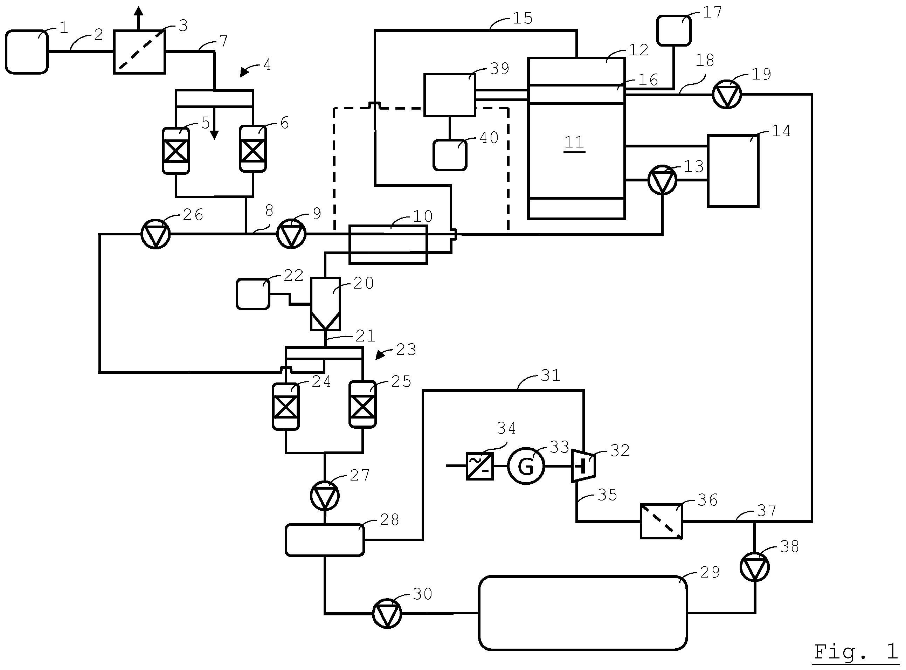

In a first system for direct thermal decomposition (Fig. 1), gas from a gas source 1 is provided as a primary input stream 2. The primary input stream 2 may in particular comprise natural gas. In an embodiment, the primary input stream 2 comprises at least 70 vol.-%, more particularly at least 80 vol.-%, methane.

The gas source 1 may comprise the gas grid. In another embodiment, the gas source 1 comprises an apparatus for regasification of Liquefied Natural Gas (LNG). In another embodiment, the gas source 1 comprises a fermentation device for producing biogas by anaerobic fermentation from a biodegradable substrate. A suitable substrate comprises algae.

The primary input stream 2 is treated in an (optional) first gas purifier 3. The first gas purifier 3 may be arranged to reduce the amount of at least one of carbon dioxide, carbon monoxide, carbonyl sulphide, hydrogen sulphide, water vapour, nitrogen, thiols and siloxanes.

In the illustrated embodiment, the first gas purifier 3 is followed by a first apparatus 4 for carrying out a Pressure-Swing Adsorption (PSA) process. In other embodiments one or the other, or even both of the first gas purifier 3 and the first PSA apparatus 4 may be omitted.

The first PSA apparatus 4 includes at least one adsorption vessel 5,6. In an embodiment, a bed of adsorbent beads, of which the nature will be described more fully below, is arranged in each vessel 5,6. The first PSA apparatus 4 is arranged to separate methane and other higher-order hydrocarbons from the other constituents of a gas stream 7 provided to the first PSA apparatus 4 as an input gas stream. The result is a gaseous feed stream 8 comprising mainly, e.g. essentially only, gases with the formula CₙHₙ+₂, where n = 1-5. A first pump 9 conveys the gaseous feed stream 8.

The gaseous feed stream 8 is pre-heated in at least a heat exchanger 10. Further pre-heating may be carried out in an embodiment.

The gaseous feed stream 8 is then introduced as bubbles in a lower section of a mass of molten medium 11 in a bubble reactor 12. The bubble reactor 12 can comprise a column formed out of quartz.

The molten medium 11 may comprise a metal or a salt. Metal has relatively good heat transfer properties. The molten medium may in particular be In, Ga, Sn, Bi, Pb or alloys thereof. In an embodiment, the molten metal used as the molten medium 11 has a melting temperature above 500° C.

Solid particles having a melting point above the melting temperature or melting range of the molten medium 11 may be suspended in the molten medium 11. These solid particles may in particular comprise an active catalyst. Suitable catalysts include Ni, Pt and Pd, in particular Ni. In an alternative embodiment, the molten medium 11 comprises a or the catalyst.

In an embodiment, the molten medium 11 is tin in which a nickel-bismuth catalyst is suspended. In another embodiment, the molten medium 11 is a mixture of 27 wt.-% Ni and 73 wt.-% Bi.

In the illustrated embodiment, the molten medium 11 is led to the bubble reactor 12 by a bubble lift pump 13 from a furnace 14, e.g. an electric arc furnace. In another embodiment, the gaseous feed stream 8 and the molten medium are pumped into the bubble reactor 12 separately. In such an embodiment, the molten medium 11 may be melted and kept at an appropriate temperature inside the bubble reactor 12, so that the separate furnace 14 can be omitted. In any case, electric heaters (not shown) may be provided in an insulating sleeve surrounding a reactor tube of the bubble reactor 12. One or more gas-fired heaters may be used in addition or instead of electrically powered heating devices to bring the molten medium 11 to or keep the molten medium 11 at the required temperature. The gas for such heaters may be gas from the primary input stream 2, the purified primary input stream 7 or the gaseous feed stream 8, or the gas may comprise gas from a product stream 15 of the bubble reactor 12.

The temperature of the molten medium 11 may be in the range of 800 - 1600° C, e.g. 1000 - 1400° C, specifically 1050 - 1350° C.

A separation layer 16 is provided on top of the molten medium 11. The separation layer 16 comprises loose particles other than particulate carbon formed in the molten medium 11. In the illustrated embodiment, these loose particles are fed into the bubble reactor 12 from an external particle source 17, e.g. a container. The feeding need not be continuous and may be carried out only once prior to commencing an operating cycle of the bubble reactor 12. In the illustrated embodiment, feeding whilst the molten medium 11 is present is possible.

The separation layer 16 forms a fluidised bed. The superficial velocity of the gas flowing through the molten medium 11 and emerging from the molten medium 11 may be less than required or optimal for fluidisation. Rather than increase this velocity, a further gas stream 18 may be introduced with the aid of a pump 19. The further gas stream 18 may comprise an inert gas. In the illustrated embodiment, the further gas stream 18 includes nitrogen.

The loose particles from the particle source 17 may be spherical. The particles have a diameter of at least 0.1 mm, e.g. at least 1 mm. The diameter may be at most 10 mm, for example.

In an embodiment, the loose particles from the particle source 17 comprise carrier particles on which a catalyst is provided. The catalyst may in particular be an activated metal. The activated metal may comprise at least one of Ni, Pt and Pd.

In a first embodiment, the particles from the particle source 17 may comprise carbon particles with or without an active catalyst provided thereon or a mixture of carbon particles with and particles without an active catalyst provided thereon.

In a particular example of the first embodiment, the particles from the particle source 17 comprise spherical carbon granules of the type disclosed more fully in WO 2007/131795 A2, the disclosure of which is hereby incorporated by reference. Thus, the particles of the first embodiment may form a granulate comprising at least 50 wt.-% of carbon obtained by pyrolysis of granulated micro-crystalline cellulose and optionally a binder and/or further additives.

The granules may be porous. The porosity may decrease from core to surface. This increases the mechanical strength and resistance to abrasion. The abrasion rate according to ASTM D4058 may be in the range of 0.2 - 1.5 wt.-%, for example. The specific surface area may be in the range of 60 -1200 m²/g.

In a second embodiment, the particles from the particle source 17 comprise ceramic particles with or without an active catalyst provided thereon. The particles may be particles having at least one outer layer and a hollow or a porous core. In a particular example of the second embodiment, the particles from the particle source 17 comprise particles of the type disclosed more fully in EP 2 198 946 A1,
WO 2010/072404 A2 and Schmidt, F. et al., "Novel Composite Spherical Granulates with Catalytic Outer Layer and Improved Conversion Efficiency and Selectivity", Chem. Eng. Technol., 35 (4), Wiley-VCH, 2012, pp. 769-775.

Thus, the particles of the second embodiment may have at least one of the following properties:
- a bulk density in the range of 560 - 2000 kg·m⁻³, e.g. 600 - 1500 kg·m⁻³, more particularly 800 - 1500 kg·m⁻³;
- a specific crush strength in the range of 1 - 7 N·mm⁻²;
- a diameter in the range of 0.1 - 5 mm, e.g. 0.25 - 4 mm, more particularly in the range of 0.5 - 3 mm;
- an overall porosity greater than 40 %;
- a sphericity of 0.7 - 1;
- a particle size distribution ratio D₉₀/D₅₀ of less than 1.6, e.g. less than 1.4, more particularly less than 1.1;
- a specific surface area (BET) in the range of 350 - 800 m²·g⁻¹, e.g. in the range of 600 - 800 m²·g⁻¹.

Where the particles have a hollow, solid or porous core and a porous surface layer, or shell, the ratio of the core diameter to the particle diameter may be in the range of 0.5 - 0.98, e.g. in the range of 0.6 - 0.8.

The porous surface layer, or shell, may comprise at least one zeolite and at least one inorganic binder, e.g. at least one of silica, clay and aluminium oxide.

Where the core is not hollow but solid or porous, the core may be made of at least one non-adsorbent material. The core may comprise kaolin and/or at least one of attapulgite, bentonite, graphite and a metal.

The core and surface layer materials may be calcined together.

Where the core is porous, the core may comprise agglomerated inorganic particles having a mean particle size equal to or smaller than the mean particle size of surrounding agglomerated particles forming the outer layer, or shell.

The particles of the second embodiment are thus relatively large and strong and can be manufactured with a relatively narrow particle size distribution.

A third embodiment combines particles of the first and second embodiments.

The separation layer 16 is effective to separate particulate solid carbon formed primarily in the molten medium 11 from the molten medium 11. This particulate solid carbon will pass through the separation layer 16. The particles of the particulate carbon formed by direct thermal decomposition in the molten medium 11 will be of an order of magnitude smaller than the particles from the particle source 17. The particles will typically have a diameter in the range of 40-100 nm. Even if they form agglomerates, such agglomerates will have a diameter in the range of 15-20 µm. The specific surface area based on BET measurements lies within the range of 17-40 m²/g.

At least some of the particulate carbon emerging from the separation layer 16 will be entrained with gas in a product stream 15 provided through an outlet of the bubble reactor 12. In the illustrated embodiment, the product stream 15 is conducted in counter-flow through the heat exchanger 10 to a first separator 20 for separating particulate carbon from gas in the product stream 15 to produce a product gas stream 21. The particulate carbon is collected in a first container 22. The first separator 20 may be a cyclone separator, for example.

In an alternative embodiment, the first separator 20 precedes the heat exchanger 10.

A further cooling device (not shown) may be provided to cool the product stream 15 or product gas stream 21.

The first container 22 may comprise bags or a metallic container, e.g. provided with a ceramic porous filter. In another embodiment, the first container 22 may be arranged to hold a suspension of carbon in a liquid. This helps avoid loss of fine carbon powder. The carbon powder is suitable for use in a wide range of applications, e.g. the production of carbon composites, the production of steel, etc.

In the illustrated embodiment, the product gas stream 21 is provided to a second PSA apparatus 23. The second PSA apparatus 23 may be the only PSA apparatus if the first PSA apparatus 4 is omitted, of course.

The second PSA apparatus 23 comprises adsorption vessels 24,25 in which a bed of adsorbent beads is arranged.

The adsorbent beads in each of the first and second PSA apparatus 4,23 may be adsorbent beads as described more fully in WO 2007/131795 A2 or the beads described more fully in EP 2 198 946 A1, WO 2010/072404 A2 and Schmidt, F. et al., "Novel Composite Spherical Granulates with Catalytic Outer Layer and Improved Conversion Efficiency and Selectivity", Chem. Eng. Technol., 35 (4), Wiley-VCH, 2012, pp. 769-775, as well as above in the context of the particles from the external particle source 17. Thus, the same particles can be used both to form the separation layer 16 and as adsorbents in one or both of the first and second PSA apparatuses 4,23. The beads in the first and second PSA apparatuses 4,23 need not carry a catalyst, however.

The second PSA apparatus 23 separates hydrogen from other constituent gases of the product gas stream 21. These other gases may be recycled by a pump 26 to be mixed into the gaseous feed stream 8. Alternatively, they may be used for other purposes, e.g. combusted to produce heat or generate electrical power.

An (optional) compressor pump 27 conveys the hydrogen to an (optional) first hydrogen storage device 28. The first hydrogen storage device 28 may be a tank or pressure vessel, a vessel containing a storage medium such as ammonia or magnesium hydride. Other chemical or physical hydrogen storage systems are conceivable, e.g. Liquid Organic Hydrogen Carrier (LOHC) system for binding and releasing hydrogen through reversible hydrogenation. In an embodiment, the hydrogen is mixed with, e.g. absorbed into, a liquid comprising a hydrocarbon compound or mix of hydrocarbon compounds to produce a fuel, e.g. for use in powering a vehicle. In one embodiment, liquefied gas, e.g. comprising at least liquid propane, is saturated with hydrogen to produce a fuel. The liquefied gas may in particular be bio-propane obtained from glycerol by hydrogenation.

In the illustrated embodiment, some of the hydrogen is conveyed to a reservoir 29 by a further pump 30, e.g. a reservoir of the type described more fully in EP 3 470 621 A1, hereby incorporated by reference. The reservoir 29 may therefore be a pressure vessel, e.g. a pressure vessel mounted on a skid, for example. In another embodiment, the first hydrogen storage device 28 is the primary, e.g. only, hydrogen storage device. Hydrogen from either the first hydrogen storage device 28 or the reservoir 29 can be supplied as an energy carrier to external users, e.g. via a dedicated hydrogen transport grid or the natural gas grid. There may also be provided a device (not shown) for refuelling vehicles, e.g. cars, buses, lorries, locomotives or ships, with the hydrogen produced by the system or the fuel comprising a mix of hydrogen and one or more hydrocarbon compounds mentioned above. Reference is made to WO 2019/031966 A1 in this respect, the contents of which are hereby incorporated by reference.

In the illustrated embodiment, a gas stream 31 comprising some of the hydrogen is reacted with air to produce electrical power. In the illustrated embodiment, a turbine 32 coupled to a generator 33, in turn connected to an inverter 34, is used to generate electricity. In other embodiments, a fuel cell may be used or another type of combustion engine than a turbine. The result is a fluid stream 35 comprising mainly nitrogen, but also water vapour. The fluid stream 35 is led to a gas processing system 36 for carrying out at least one of a drying process and a condensation process. The output of the gas processing system will be a gas stream 37 comprising mainly nitrogen, together with a small amount of carbon dioxide and noble gases originating from the atmosphere. The nitrogen gas stream 37 will generally comprise at least 95 vol.-% nitrogen, e.g. at least 99 vol.-% nitrogen.

In the illustrated embodiment, some of the nitrogen in the nitrogen gas stream 37 is used to pressurise the reservoir 29 using a reservoir pump 38. This may be done in the manner set out more fully in EP 3 470 621 A1, for example. In an alternative embodiment, the reservoir 29 comprises a movable barrier such as a membrane or piston, allowing the nitrogen to regulate the pressure without being mixed with the hydrogen in the reservoir 29.

In the illustrated embodiment, some of the nitrogen gas stream 37 forms the further gas stream 18. Thus, the separation layer 16 can be maintained as a fluidised bed without introducing oxygen into the bubble reactor 12. It remains the case that the system is used for direct thermal decomposition of at least one hydrocarbon compound into carbon and hydrogen essentially without forming carbon dioxide.

As mentioned, at least some of the particulate carbon formed in the bubble reactor 12 is carried away in the product stream 15 and recovered in the first separator 20. In the illustrated embodiment, provision is also made for the removal of at least part of the separation layer 16 from the bubble reactor 12, e.g. through the pressure established by the further gas stream 18 or by means of a mechanical device (not shown). The removed part comprises particulate carbon and some of the particles from the particle source 17. A second separator 39 is provided to separate the particulate carbon from these other particles. This is relatively easy due to the difference in particle size and the well-defined particle size of the particles from the particle source 17. The particulate carbon is collected in a second container 40 similar to the first container 22.

The second separator 39 may comprise an air separator, also known as air sifter, wind sifter or air classifier. In another embodiment, the second separator 39 may comprise a bubbling carbon bed. In particular in the latter embodiment, the second separator may comprise a heat exchanger for pre-heating the gaseous feed stream 8, as indicated by the dashed line in the drawing. Thus, heat may be recovered from the part of the separation layer 16 drawn from the bubble reactor 12 and used to heat the gaseous feed stream 8 prior to the gaseous feed stream 8 being processed in the bubble reactor 12. In this embodiment, the heat exchanger 10 may be omitted, as indicated by the dashed line in the drawing, or the gaseous feed stream 8 may pass through the two heat exchangers in series.

The particles other than the particulate carbon are returned from the second separator 39 to the separation layer 16 and/or the particle source 17. Re-use is made possible by the relatively high crush strength of these particles and the fact that they can be separated relatively well from the particulate carbon produced in the direct thermal decomposition process.

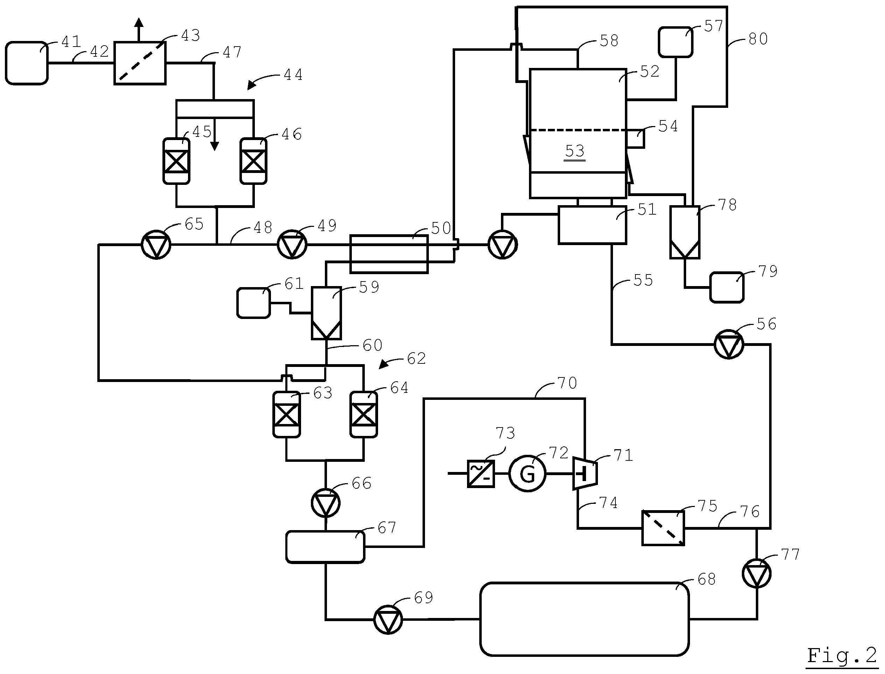

In a second direct thermal decomposition system (Fig.2), gas from a gas source 41 is again provided as a primary input stream 42. The primary input stream 42 may in particular comprise natural gas. In an embodiment, the primary input stream 42 comprises at least 70 vol.-%, more particularly at least 80 vol.-%, methane.

As in the first system, the gas source 41 may comprise the gas grid, an apparatus for regasification of Liquefied Natural Gas (LNG) or a fermentation device for producing biogas by anaerobic fermentation from a biodegradable substrate such as algae, for example.

The primary input stream 42 is treated in an (optional) first gas purifier 43. The first gas purifier 43 may be arranged to reduce the amount of at least one of carbon dioxide, carbon monoxide, carbonyl sulphide, hydrogen sulphide, water vapour, nitrogen, thiols and siloxanes.

In the illustrated second system, the first gas purifier 43 is followed by a first apparatus 44 for carrying out a Pressure-Swing Adsorption (PSA) process. In other embodiments one or the other, or even both of the first gas purifier 43 and the first PSA apparatus 44 may be omitted. A temperature-swing adsorption apparatus may be used instead of the first PSA apparatus 44.

The first PSA apparatus 44 includes at least one adsorption vessel 45,46. In an embodiment, a bed of adsorbent beads as described above in relation to the first system (Fig. 1) is arranged in each vessel 45,46. The first PSA apparatus 44 is arranged to separate methane and other higher-order hydrocarbons from the other constituents of a gas stream 47 provided to the first PSA apparatus 44 as an input gas stream. The result is a gaseous feed stream 48 comprising mainly, e.g. essentially only, gases with the formula CₙHₙ+₂, where n = 1-5. A first pump 49 conveys the gaseous feed stream 48.

The gaseous feed stream 48 is pre-heated in a heat exchanger 50. The gaseous feed stream 48 is then pre-heated to a higher temperature in a heating device 51. At this stage, the temperature of the gaseous feed stream 48 may still be below a temperature needed to effect direct thermal decomposition. Alternatively, the temperature may be at a lower end of the temperature range in which direct thermal decomposition takes place, but the gaseous feed stream may reach this temperature only shortly before exiting the heating device 51, so that very little carbon is deposited in the heating device 51. The heating device 51 may be an electric heating device (i.e. one with at least one heating element for effecting Joule heating), a microwave heating device, a plasma heater or a device comprising a molten medium (e.g. molten metal or salt) through which the gaseous feed stream is passed in the form of bubbles.

The pre-heated gaseous feed stream 48 is then introduced into a continuous fluidised bed reactor 52.

A layer 53 of loose particles in a gaseous phase forming a fluidised bed is provided in the fluidised bed reactor 52. A further heating device 54 is provided to raise the temperature of the gaseous feed stream 48 to within the range at which direct thermal decomposition takes place, at least within the layer 53 forming the fluidised bed.

In the illustrated embodiment, a further gas stream 55 is introduced with the aid of a pump 56. The further gas stream 55 may comprise an inert gas. In the illustrated embodiment, the further gas stream 55 includes nitrogen. In the illustrated embodiment, the further gas stream 55 is also pre-heated by the heating device 51. In an alternative embodiment, the further gas stream 55 is heated by a different device and introduced into the fluidised bed reactor 52 separately from the gaseous feed stream 48.

At least initially, the loose particles are provided from a particle source 57.

The loose particles from the particle source 57 may be spherical. The particles have a diameter of at least 0.1 mm, e.g. at least 1 mm. The diameter may be at most 10 mm, for example.

The loose particles from the particle source 57 comprise carrier particles on which a catalyst is provided. The catalyst may in particular be an activated metal. The activated metal may comprise at least one of Ni, Pt and Pd.

These particles are those of the first and second embodiments of the first system (Fig. 1) as described above. The second embodiment, in which the particles comprise ceramic particles of which at least an outer shell is porous and acts as the carrier for the catalyst, is most suitable.

The particles of the second embodiment are relatively large and strong and can be manufactured with a relatively narrow particle size distribution.

The layer 53 forming the fluidised bed is effective to separate particulate solid carbon formed primarily in that layer 53 through the motion of the loose particles. The particles of the particulate carbon formed by direct thermal decomposition will be of an order of magnitude smaller than the particles from the particle source 57. The carbon particles formed in the layer 53 will typically have a diameter in the range of 40-100 nm. Even if they form agglomerates, such agglomerates will have a diameter in the range of 15-20 µm. The specific surface area based on BET measurements lies within the range of 17-40 m²/g.

At least some of the particulate carbon emerging from the layer 53 forming the fluidised bed will be entrained with gas in a product stream 58 provided through an outlet of the fluidised bed reactor 52. In the illustrated embodiment, the product stream 58 is conducted in counter-flow through the heat exchanger 50 to a first separator 59 for separating particulate carbon from gas in the product stream 58 to produce a product gas stream 60. The particulate carbon is collected in a first container 61. The first separator 59 may be a cyclone separator, for example.

In an alternative embodiment, the first separator 59 precedes the heat exchanger 50.

A further cooling device (not shown) may be provided to cool the product stream 58 or product gas stream 60.

The first container 61 may comprise bags or a metallic container, e.g. provided with a ceramic porous filter. In another embodiment, the first container 61 may be arranged to hold a suspension of carbon in a liquid. This helps avoid loss of fine carbon powder. The carbon powder is suitable for use in a wide range of applications, e.g. the production of carbon composites, the production of steel, etc.

In the illustrated embodiment, the product gas stream 60 is provided to a second PSA apparatus 62. The second PSA apparatus 62 may be the only PSA apparatus if the first PSA apparatus 44 is omitted, of course.

The second PSA apparatus 62 comprises adsorption vessels 63,64 in which a bed of adsorbent beads is arranged.

The adsorbent beads in each of the first and second PSA apparatus 44,62 may be adsorbent beads as described more fully in WO 2007/131795 A2 or the beads described more fully in EP 2 198 946 A1, WO 2010/072404 A2 and Schmidt, F. et al., "Novel Composite Spherical Granulates with Catalytic Outer Layer and Improved Conversion Efficiency and Selectivity", Chem. Eng. Technol., 35 (4), Wiley-VCH, 2012, pp. 769-775, as well as above in relation to the first system (Fig. 1).

The second PSA apparatus 62 separates hydrogen from other constituent gases of the product gas stream 60. These other gases may be recycled by a pump 65 to be mixed into the gaseous feed stream 48. Alternatively, they may be used for other purposes, e.g. combusted to produce heat or generate electrical power.

An (optional) compressor pump 66 conveys the hydrogen to an (optional) first hydrogen storage device 67. The first hydrogen storage device 67 may be constituted or used in the same manner as the first hydrogen storage device 28 of the first system (Fig. 1).

In the illustrated embodiment of the second system (Fig. 2), some of the hydrogen is conveyed to a reservoir 68 by a further pump 69, e.g. a reservoir of the type described more fully in EP 3 470 621 A1, hereby incorporated by reference. The reservoir 68 may therefore be a pressure vessel, e.g. a pressure vessel mounted on a skid, for example. In another embodiment, the first hydrogen storage device 67 is the primary, e.g. only, hydrogen storage device. Hydrogen from either the first hydrogen storage device 67 or the reservoir 68 can be supplied as an energy carrier to external users, e.g. via a dedicated hydrogen transport grid or the natural gas grid. There may also be provided a device (not shown) for refuelling vehicles, e.g. cars, buses, lorries, locomotives or ships with the hydrogen produced by the system or the fuel comprising a mix of hydrogen and one or more hydrocarbon compounds mentioned above. Again, reference is made to WO 2019/031966 A1 in this respect, the contents of which are hereby incorporated by reference.

In the illustrated embodiment, a gas stream 70 comprising some of the hydrogen is reacted with air to produce electrical power. In the illustrated embodiment, a turbine 71 coupled to a generator 72, in turn connected to an inverter 73, is used to generate electricity. In other embodiments, a fuel cell may be used or another type of combustion engine than a turbine. The result is a fluid stream 74 comprising mainly nitrogen, but also water vapour. The fluid stream 74 is led to a gas processing system 75 for carrying out at least one of a drying process and a condensation process. The output of the gas processing system will be a gas stream 76 comprising mainly nitrogen, together with a small amount of carbon dioxide and noble gases originating from the atmosphere. The nitrogen gas stream 76 will generally comprise at least 95 vol.-% nitrogen, e.g. at least 99 vol.-% nitrogen.

In the illustrated embodiment, some of the nitrogen in the nitrogen gas stream 76 is used to pressurise the reservoir 68 using a reservoir pump 77. This may be done in the manner set out more fully in EP 3 470 621 A1, for example. In an alternative embodiment, the reservoir 68 comprises a movable barrier such as a membrane or piston, allowing the nitrogen to regulate the pressure without being mixed with the hydrogen in the reservoir 68.

In the illustrated embodiment, some of the nitrogen gas stream 76 forms the further gas stream 55. Thus, the layer 53 can be maintained as a fluidised bed without introducing oxygen into the fluidised bed reactor 52. It remains the case that the system is used for direct thermal decomposition of at least one hydrocarbon compound into carbon and hydrogen essentially without forming carbon dioxide.

As mentioned, at least some of the particulate carbon formed in the fluidised bed reactor 52 is carried away in the product stream 58 and recovered in the first separator 59. In the second system, as in the first system (Fig. 1), provision is also made for the removal of at least part of the layer 53 forming the fluidised bed from the fluidised bed reactor 52, e.g. through the pressure established by the further gas stream 55 or by means of a mechanical device (not shown) or gravity. The removed part comprises particulate carbon and some of the carrier particles carrying the catalyst. A second separator 78 is provided to separate the particulate carbon from these other particles. The second separator 78 may be an elutriation device or air sifter, or a cascade impactor, for example. The second separator 78 may comprise a mechanical device, e.g. arranged to separate carbon formed on the particles comprising a catalyst on a carrier mechanically, for example through friction.

In an alternative embodiment, separation may be achieved chemically.

In another embodiment, the second separator 78 may comprise a bubbling carbon bed.

The particulate carbon is collected in a second container 79 similar to the first container 61.

The particles other than the particulate carbon are returned in a particle stream 80 from the second separator 78 to the layer 53 forming the fluidised bed through a separate port into the fluidised bed reactor 52 and/or to the particle source 57. The particle stream 80 may be returned mechanically or carried in a stream of compressed gas, for example. This may include gas from the further gas stream 55. Re-use is made possible by the relatively high crush strength of these particles and the fact that they can be separated relatively well from the particulate carbon produced in the direct thermal decomposition process.

The invention is not limited to the embodiments described above, which may be varied within the scope of the accompanying claims. For example, in the first direct thermal decomposition system, the separation layer 16 may be higher than the height of the column of molten medium 11 in the bubble reactor 12. The molten medium 11 may comprise no catalyst, either as a constituent component or suspended therein. Instead of circulating the molten medium 11 a heat exchange medium may be circulated between a heating device and the bubble reactor 12. The particulate carbon may be formed mainly in the molten medium 11, mainly in the separation layer 16 or in approximately equal proportions in both.

A membrane separation device may be used instead of the second PSA apparatuses 23,62. In particular, but not only, in that case, the product stream 15,58 or product gas stream 15,60 may be pressurised by a solid-state electrochemical compressor (not shown). Suitable examples are disclosed in WO 2020/106155 A1 or WO 2020/106153 A1. Such a compressor may also or alternatively be used to implement any one of the pumps 9,26,27,30,38; 49,65,66,69,77.

In both systems, energy used to drive the thermal decomposition reaction may be supplied at least in part from a source of renewable energy, e.g. wind energy or solar energy, potentially allowing a negative-emission effect to be achieved.

The general introduction and the description of the first direct thermal decomposition system relate, according to an independent aspect, to a:
1. Method of carrying out direct thermal decomposition of a hydrocarbon compound into carbon and hydrogen, comprising:
   providing a molten medium 11 in a bubble reactor 12;
   introducing a gaseous feed stream 8 comprising at least one hydrocarbon compound into the molten medium 11 in the bubble reactor 12; and
   removing at least hydrogen gas and particulate carbon formed by thermal decomposition from the reactor 12 at a level above the molten medium 11,
   wherein the method includes providing on top of the molten medium 11 a layer 16 permeable to the particulate carbon and comprising loose particles other than the particulate carbon in a gas phase.
   Because the loose particles of the layer are from an external source, they can be tailored to achieve good separation between the molten medium and the particulate carbon formed by thermal decomposition, as well as good separation from the particulate carbon. The particulate carbon, having a controlled size generally much lower than the particle size of the loose particles from the external source, will pass through the layer. The particulate carbon can then easily be separated from the particles from the external source, if not already entrained by the product gas. The particulate carbon emerging from the layer is separated from the molten medium relatively effectively by the layer of loose particles. Such separation can be carried out only in the layer or in a separator separate from the bubble reactor to which part of the layer is led. By using particles other than the particulate carbon, the particle properties and the superficial velocity of the gas can be set independently. The superficial velocity can be optimised for conversion of the hydrocarbon compound into carbon and hydrogen, in particular to achieve a minimum conversion yield. The loose particles can be selected for best possible separation given the superficial velocity.
   The gases in the gaseous feed stream will generally comprise or consist essentially of gases with the formula CₙHₙ+₂, where n = 1-5. Direct thermal decomposition, also known as pyrolysis, is an endothermic reaction in which essentially no CO₂ is produced. The process is thus environmentally friendlier than Steam Methane Reforming (SMR), for example, as well as being simpler and requiring less energy. Conversion yields of over 90 % can be achieved, which is sufficient for many applications to avoid having to purify the product gas stream.
   The particulate carbon formed in the method is mainly in the form of graphite. The carbon will usually be in the form of powder comprising flakes having a largest diameter in the range of 40-100 nm. Even if the powder forms clusters or agglomerates, these will have a diameter in the range of 15-20 µm. The particles other than the particulate carbon may have a diameter an order of magnitude larger than that of the particulate carbon. For example, the particles other than the particulate carbon may have a diameter, or a mean diameter D₅₀, of at least 0.1 mm, e.g. at least 0.2 mm, for example at least 1 mm.
   The method yields a product stream from the bubble reactor, wherein the product stream consists of a stream of gas comprising at least the hydrogen, as well as of entrained solid matter. At least 90 %, e.g. at least 95 %, more particularly at least 99 % by mass of the entrained solid matter is formed by solid carbon. The remainder comprises essentially impurities. Examples of such impurities include the material of the molten medium, any catalyst present in the bubble reactor and minerals already present in the feed stream (e.g. where the feed stream comprises biogas).

Embodiments are defined in the following clauses:
2. Method according to clause 1,
   wherein the layer 16 forms a fluidised bed.
3. Method according to clause 2, comprising
   introducing a further gas stream 18 into the layer 16, e.g. an inert gas stream.
4. Method according to clause 3,
   wherein the further gas stream 18 comprises nitrogen, and
   wherein the nitrogen is obtained by reacting with air a gas stream 31 comprising mainly hydrogen, e.g. a gas stream 31 obtained from a product stream 15 from the bubble reactor 12.
5. Method according to any one of the preceding clauses,
   wherein the thermal decomposition is effected in at least the molten medium11.
6. Method according to any one of the preceding clauses, including
   obtaining a gas stream 31 from a product stream 15 from the bubble reactor 12 and
   generating electrical power by reacting the gas stream 31 obtained from the product stream 15 with a gas mixture comprising at least one oxidant.
7. Method according to any one of the preceding clauses,
   wherein the loose particles other than the particulate carbon comprise spherical particles.
8. Method according to any one of the preceding clauses,
   wherein the loose particles other than the particulate carbon are provided from a source, and
   wherein, at least at source, the particles have a particle size distribution ratio D₉₀/D₅₀ of less than 1.6, e.g. less than 1.4 or less than 1.1.
9. Method according to any one of the preceding clauses,
   wherein the loose particles other than the particulate carbon comprise particles comprising a catalyst on a carrier.
10. Method according to any one of the preceding clauses,
   wherein the loose particles other than the particulate carbon comprise particles made predominantly of at least one ceramic material.
11. Method according to any one of the preceding clauses,
   wherein the loose particles other than the particulate carbon comprise particles of which at least an outer shell is porous.
12. Method according to any one of the preceding clauses,
   wherein the loose particles other than the particulate carbon comprise particles having a hollow core.
13. Method according to any one of the preceding clauses, comprising
   removing at least part of the layer 16 from the bubble reactor 12, and
   separating constituents of the removed part, e.g. in an air separator.
14. Method according to any one of the preceding clauses, comprising
   obtaining a gas stream 21 from a product stream 15 from the bubble reactor 12, and
   separating the hydrogen from at least one other gas present in the gas stream 21 obtained from the product stream 15.
15. Method according to clause 14,
   wherein the separation is effected by means of a pressure-swing adsorption, PSA, process or a temperature-swing adsorption, TSA, process.
16. Method according to any one of the preceding clauses,
   wherein the gaseous feed stream 8 is obtained from natural gas, e.g. Liquefied Natural Gas, LNG, and
   wherein obtaining the gaseous feed stream 8 comprises separating methane and higher-order hydrocarbons from at least one other constituent of the natural gas by means of a pressure-swing adsorption, PSA, process or a temperature-swing adsorption, TSA, process.
17. Method according to at least one of clauses 15 and 16,
   wherein the PSA or TSA process comprises introducing the gas stream 21 or natural gas into an adsorption vessel 5,6,24,25 comprising a bed of adsorbent beads,
   wherein the beads comprise a hollow core or at least one core comprising at least one inorganic material, which core is porous and non-adsorbent and, on the surface of the core, at least one layer comprising a porous and adsorbent material.

The general introduction and the description of the first direct thermal decomposition system also relate, according to an independent aspect, to a:
18. System for direct thermal decomposition of a hydrocarbon compound into carbon and hydrogen, e.g. by means of a method according to any one of the preceding clauses, comprising:
a bubble reactor 12 having at least one outlet for a product stream 15 comprising the hydrogen gas,
a system for providing a molten medium 11 in the bubble reactor 12;
a conduit for supplying a gaseous feed stream 8 comprising at least one hydrocarbon compound;
a device 13, in communication with the conduit, for introducing the gaseous feed stream 8 as bubbles into the molten medium 11 in the bubble reactor 12; and
a quantity of loose particles comprising particles comprising a catalyst on a carrier,
wherein the bubble reactor 12 includes an inlet for introducing the loose particles other than particulate carbon formed in the molten medium 11 into the bubble reactor 12 to form a layer 16 of the loose particles in a gas phase on the molten medium 11, the layer 16 being permeable to the particulate carbon.

Embodiments of the system are defined in the following clauses:
19. System according to clause 18,
   wherein the system for providing a molten medium 11 in the bubble reactor 12 is arranged to maintain the molten medium 11 at a temperature sufficient to achieve thermal decomposition of the hydrocarbon compound in the molten medium 11.
20. System according to clause 18 or 19, further comprising a device 19 for introducing a further gas stream 18 e.g. an inert gas stream, into the layer 16.
21. System according to clause 20,
   wherein the further gas stream 18 comprises nitrogen, and
   wherein the system includes a device 32,36 arranged to obtain the nitrogen by reacting with air a gas stream 31 comprising mainly hydrogen, e.g. a gas stream 31 obtained from a product stream 15 from the bubble reactor 12.
22. System according to any one of clauses 18-21, further including a system 32,33,34 for generating electrical power by reacting a gas stream 31 obtained from a product stream 15 from the bubble reactor 12 with a gas mixture comprising at least one oxidant.
23. System according to any one of clauses 18-22,
   wherein at least part of the layer 16 is removable from the bubble reactor 12, and
   the system includes at least one device 39 for separating constituents of the removed part, e.g. an air separator.
24. System according to any one of clauses 18-23, further comprising an apparatus 23 for separating the hydrogen from at least one other gas in a gas stream 21 obtained from a product stream 15 from the bubble reactor 12, e.g. a pressure-swing adsorption, PSA, apparatus or a temperature-swing adsorption, TSA, apparatus.
25. System according to any one of clauses 18-24, further including at least one pressure-swing adsorption, PSA, apparatus 4 or temperature-swing adsorption, TSA, apparatus for obtaining the gaseous feed stream 8 by separating methane and higher-order hydrocarbons from at least one other constituent of natural gas, e.g. Liquefied Natural Gas, LNG.
26. System according to at least one of clauses 24 and 25,
   wherein the PSA apparatus 4,23 or TSA apparatus comprises at least one adsorption vessel 5,6,24,25 comprising a bed of composite adsorbent beads, and
   wherein the beads comprise at least one core comprising at least one inorganic material, which core is porous and non-adsorbent and, on the surface of the core, at least one layer comprising a porous and adsorbent material.

### List of reference numerals

- 1: - gas source
- 2: - primary input stream
- 3: - first gas purifier
- 4: - first PSA apparatus
- 5: - adsorption vessel
- 6: - adsorption vessel
- 7: - purified primary input stream
- 8: - gaseous feed stream
- 9: - first pump
- 10: - heat exchanger
- 11: - molten medium
- 12: - bubble reactor
- 13: - bubble lift pump
- 14: - furnace
- 15: - product stream
- 16: - separation layer
- 17: - particle source
- 18: - further gas stream
- 19: - further gas stream pump
- 20: - first separator
- 21: - product gas stream
- 22: - container
- 23: - second PSA apparatus
- 24: - adsorption vessel
- 25: - adsorption vessel
- 26: - gas recycling pump
- 27: - compressor pump
- 28: - first hydrogen storage device
- 29: - reservoir
- 30: - further pump
- 31: - hydrogen gas stream
- 32: - turbine
- 33: - generator
- 34: - inverter
- 35: - fluid stream
- 36: - gas processing system
- 37: - nitrogen gas stream
- 38: - reservoir pump
- 39: - second separator
- 40: - second container
- 41: - gas source
- 42: - primary input stream
- 43: - first gas purifier
- 44: - first PSA apparatus
- 45: - adsorption vessel
- 46: - adsorption vessel
- 47: - purified primary input stream
- 48: - gaseous feed stream
- 49: - first pump
- 50: - heat exchanger
- 51: - heating device
- 52: - fluidised bed reactor
- 53: - particle layer
- 54: - reactor heating device
- 55: - further gas stream
- 56: - further gas stream pump
- 57: - particle source
- 58: - product stream
- 59: - first separator
- 60: - product gas stream
- 61: - container
- 62: - second PSA apparatus
- 63: - adsorption vessel
- 64: - adsorption vessel
- 65: - gas recycling pump
- 66: - compressor pump
- 67: - first hydrogen storage device
- 68: - reservoir
- 69: - further pump
- 70: - hydrogen gas stream
- 71: - turbine
- 72: - generator
- 73: - inverter
- 74: - fluid stream
- 75: - gas processing system
- 76: - nitrogen gas stream
- 77: - reservoir pump
- 78: - second separator
- 79: - second container
- 80: - particle stream

## Claims

1. Method of carrying out direct thermal decomposition of a hydrocarbon compound into carbon and hydrogen, comprising:
introducing a gaseous feed stream (8;48) comprising at least one hydrocarbon compound into a reactor (12;52); and
removing at least hydrogen gas and particulate carbon formed by thermal decomposition from the reactor (12;52),
wherein the method includes providing in the reactor (12;52) a layer (16;53) permeable to the particulate carbon and comprising loose particles other than the particulate carbon in a gas phase and
passing the gaseous feed stream (8;48) through the layer (16; 53),
wherein the loose particles other than the particulate carbon comprise particles comprising a catalyst on a carrier, and
wherein the method includes removing at least part of the layer (16;53) from the reactor (12;52), separating constituents of the removed part, the constituents including some of the particles comprising a catalyst on a carrier, and returning the separated particles comprising a catalyst on a carrier to the layer (16;53),
**characterised in that**
the layer (16;53) forms a fluidised bed, and **in that**
the particles comprising a catalyst on a carrier comprise particles of which at least an outer shell is porous and acts as the carrier and which have a hollow core or a porosity decreasing from core to surface.

2. Method according to claim 1, comprising
introducing a further gas stream (18;55) into the layer (16;53), e.g. an inert gas stream.

3. Method according to claim 2,
wherein the further gas stream (18;55) comprises nitrogen, and
wherein the nitrogen is obtained by reacting with air a gas stream (31;70) comprising mainly hydrogen, e.g. a gas stream (31;70) obtained from a product stream (15;58) from the reactor (12;52).

4. Method according to any one of the preceding claims, comprising:
providing a molten medium (11) in a bubble reactor (12), and
heating the gaseous feed stream (8) by introducing the gaseous feed stream into the molten medium (11) in the bubble reactor (12).

5. Method according to claim 4,
wherein the layer (16) is provided on top of the molten medium (11) in the bubble reactor (12).

6. Method according to claim 4 or 5,
wherein the thermal decomposition is effected in at least the molten medium (11).

7. Method according to any one of the preceding claims,
wherein the loose particles other than the particulate carbon comprise particles made predominantly of at least one ceramic material.

8. Method according to any one of the preceding claims,
wherein the catalyst comprises at least one transition metal.

9. Method according to any one of the preceding claims, comprising
obtaining a gas stream (21;58) from a product stream (15;58) from the reactor (12;52), and
separating the hydrogen from at least one other gas present in the gas stream (21;58) obtained from the product stream (15;58).

10. Method according to claim 9,
wherein the separation is effected by means of a pressure-swing adsorption, PSA, process or a temperature-swing adsorption, TSA, process.

11. Method according to any one of the preceding claims,
wherein the gaseous feed stream (8;48) is obtained from natural gas, e.g. Liquefied Natural Gas, LNG, and
wherein obtaining the gaseous feed stream (8;48) comprises separating methane and higher-order hydrocarbons from at least one other constituent of the natural gas by means of a pressure-swing adsorption, PSA, process or a temperature-swing adsorption, TSA, process.

12. Method according to at least one of claims 10 and 11,
wherein the PSA or TSA process comprises introducing the gas stream (21;58) or natural gas into an adsorption vessel (5,6,24,25;45,46,63,64) comprising a bed of adsorbent beads,
wherein the beads comprise a hollow core or at least one core comprising at least one inorganic material, which core is porous and non-adsorbent and, on the surface of the core, at least one layer comprising a porous and adsorbent material.

13. Method according to any one of the preceding claims,
wherein separating constituents of the removed part includes separating carbon from the loose particles, e.g. mechanically separating the carbon from the loose particles.

14. Method according to any one of the preceding claims,
wherein the gaseous feed stream (8;48) is heated in the fluidised bed to a temperature higher than a temperature at which the gaseous feed stream (8;48) is introduced into the reactor (12;52), the higher temperature being sufficient to effect the direct thermal decomposition.

15. System for direct thermal decomposition of a hydrocarbon compound into carbon and hydrogen, e.g. by means of a method according to any one of the preceding claims, comprising:
a reactor (12;52) having at least one outlet for a product stream (15;58) comprising the hydrogen gas,
a conduit for supplying a gaseous feed stream (8;48) comprising at least one hydrocarbon compound;
a device (13), in communication with the conduit, for introducing the gaseous feed stream (8;48) into the reactor (12;52); and
a quantity of loose particles comprising particles comprising a catalyst on a carrier,
wherein the reactor (12;52) includes an inlet for introducing the loose particles into the reactor (12;52) to form a layer (16;53) of the loose particles in a gas phase, the layer (16;53) being permeable to the particulate carbon,
wherein at least part of the layer (16;53) is removable from the reactor (12;52), and
the system includes at least one device (39;78) for separating constituents of the removed part and a device for returning at least some of the particles comprising a catalyst on a carrier that are comprised amongst the constituents to the layer (16;53), **characterised in that**
the reactor (12;52) comprises a fluidised bed reactor for providing the layer (16;53) as a fluidised bed, and **in that**
the particles comprising a catalyst on a carrier comprise particles of which at least an outer shell is porous and acts as the carrier and which have a hollow core or a porosity decreasing from core to surface.
